Europäisches Patentamt

European Patent Office

Office européen des brevets

(11) Publication number: **0 129 749**
**B1**

# EUROPEAN PATENT SPECIFICATION

(45) Date of publication of patent specification: **28.10.87**

(21) Application number: **84106427.2**

(22) Date of filing: **05.06.84**

(51) Int. Cl.⁴: **G 21 C 15/24**

54 Boiling water reactor.

(30) Priority: **15.06.83 JP 105817/83**

(43) Date of publication of application:
**02.01.85 Bulletin 85/01**

(45) Publication of the grant of the patent:
**28.10.87 Bulletin 87/44**

(84) Designated Contracting States:
**AT DE GB**

(56) References cited:
**DE-A-3 016 351**
**FR-A-1 487 638**
**FR-A-2 018 778**
**US-A-4 190 396**

**PATENTS ABSTRACTS OF JAPAN, vol. 7, nr. 50
(M-197) 1195r, 26th February 1983 & JP - A - 57
198 379 (KUBOTA TEKKO K.K.) (04-12-1982)**

(73) Proprietor: **HITACHI, LTD.**
**6, Kanda Surugadai 4-chome Chiyoda-ku
Tokyo 100 (JP)**

(72) Inventor: **Okamura, Tomoyoshi**
**213-59, Hakari Minori-machi
Higashiibaraki-gun Ibaraki-ken (JP)**
Inventor: **Yazawa, Setsuo**
**2-14-33, Higashi-abiko
Abiko-shi Chiba-ken (JP)**

(74) Representative: **Finck, Dieter et al
Patentanwälte v. Füner, Ebbinghaus, Finck
Mariahilfplatz 2 & 3
D-8000 München 90 (DE)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

## Description

The invention relates to a boiling water reactor as described in the pre-characterizing portion of claim 1. Such boiling water reactor is known from DE—A 30 16 351.

Conventionally, a so-called "external forced recirculation system" is employed in boiling water reactors. In this system, a recirculation pump provided outside the reactor pressure vessel supplies and accelerates high-pressure reactor coolant to a jet pump within the reactor pressure vessel, and this jet pump in turn recirculates the reactor coolant. However, this recirculation system has the problems that its structure is complicated, cavitation is likely to occur in the jet pump, and the reactor coolant would be lost if the pipe connecting the reactor pressure vessel to the recirculation pump breaks.

These problems are partially solved by the arrangement known from DE—A 30 16 351 in which the coolant flow guiding means has the form of a substantially cylindrical diffuser whereby the impeller of the pump reacts back to the coolant flowing into the inlet of the pump. Thus, a vortex is continuously generated in and before the pump inlet. When the vortex flows into the pump impeller, noise and vibration are generated so that a stable and quiet operation of the pump is impossible and the operation of the reactor itself is impeded.

It is accordingly an object underlying the present invention to prevent the generation of vortices near the inlet of the recirculation pumps, to ensure a stable and quiet operation of the recirculation pump, thus improving the reliability thereof as well as that of the reactor.

According to the present invention said object is solved by the features described in claim 1.

Preferred embodiments of the reactor of the present invention are described in claims 2 to 10.

The invention will be more easily understood by the following description of embodiments thereof with reference to the attached drawings, in which:

Figure 1 is a schematic section through a boiling water reactor,

Figure 2 is a longitudinal sectional view of an internal recirculation pump in accordance with the present invention,

Figure 3 is an enlarged sectional view of the main pump body of Figure 2,

Figure 4 is a section taken along the line II—II of Figure 3,

Figure 5 is a section taken along the line III—III of Figure 3,

Figure 6 is a sectional view of a second embodiment of the pump inlet portion in accordance with the present invention,

Figure 7 is a sectional view of a third embodiment of the pump inlet portion of the present invention,

Figure 8 is a sectional view of a fourth embodiment of the pump inlet portion of the present invention,

Figure 9 is a developed section taken along the line VI—VI of Figure 8,

Figure 10 is a sectional view of a fifth embodiment of the pump inlet portion of the present invention, and

Figure 11 is a section taken along the line VIII—VIII of Figure 10.

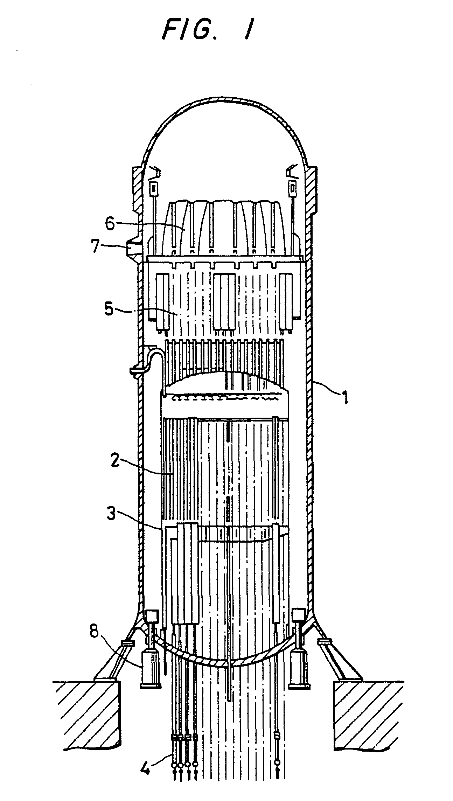

First of all, the overall structure of a boiling water reactor will be described with reference to Figure 1. In the drawing, reference numeral 1 represents a reactor pressure vessel, a shroud 3 surrounding a reactor core 2 is provided within this reactor pressure vessel 1. Control rods 4 are connected to the reactor core 2 and control the activity of the reactor core 2. Steam generated by the reactor core 2 is sent to a steam separator 5, where water is removed, and is thereafter dried in a steam dryer 6. The steam is then sent to a turbine (not shown) from a steam outlet 7 through a steam pipe.

Reference numeral 8 represents an internal recirculation pump 8. A plurality of pumps 8 are arranged on a periphery at the bottom of the reactor pressure vessel 1, so as to recirculate reactor coolant inside the reactor pressure vessel 1.

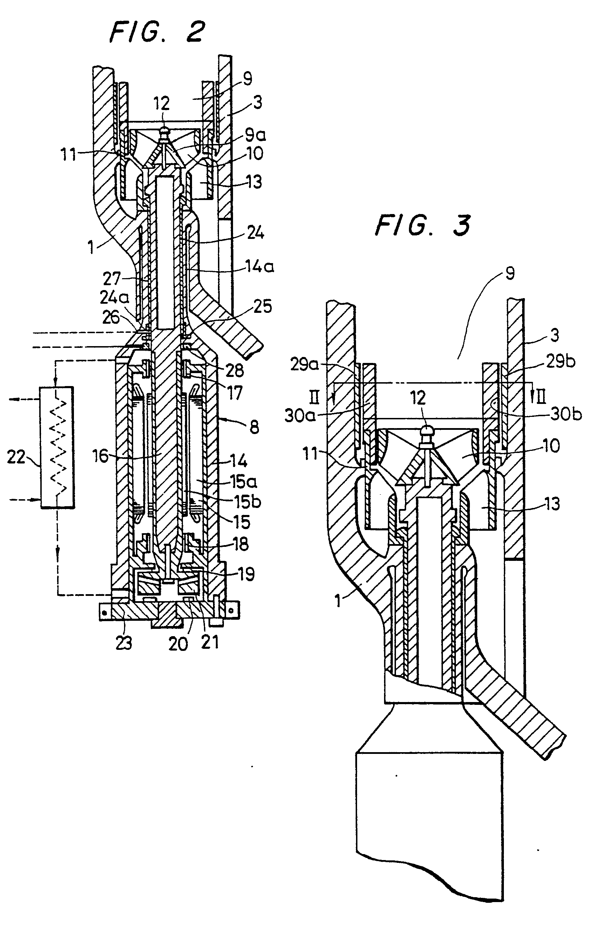

The construction of an internal recirculation pump 8 will next be described with reference to Figure 2.

In the drawing, reference numeral 9 represents a main pump body, and a plurality of impellers 10 are provided on a hub 9a of the main pump body 9. A suspension member 12 by which the main pump body 9 can be pulled up is provided above the hub 9a. A diffuser 13 is arranged around the outer periphery of the impeller 10. The main pump body 9 is arranged in such a fashion that its inlet projects from a pump deck 11 which is provided horizontally in an annular flow passage between the reactor pressure vessel 1 and the shroud 3. It functions so as to transfer reactor coolant from above to below in the drawing. Reference numeral 14 represents a motor case which is welded to the bottom of the reactor pressure vessel 1. A wet type of motor 15 consisting of a stator 15a and a rotor 15b is provided within the motor case 14. The rotor 15b of the motor 15 is connected to the impellers 10 of the main pump body 9 by a pump shaft 16. The pump shaft 16 is supported rotatably by radial bearings 17, 18 and thrust bearings 19, 20. Reference numeral 21 represents an auxiliary impeller which circulates the reactor coolant within the motor case 14 in the direction indicated by arrows in the drawing, and keeps the temperature within the motor case at a constant level by means of a heat exchanger 22. Reference numeral 23 represents a lid of the motor case 14. A cylindrical stretch tube 24 is inserted into a nozzle portion 14a of the motor case 14, and fixes the upper diffuser 13 to the nozzle portion 14a.

This diffuser 13 isetion 14a.

This diffuser 13 is firmly fixed to the nozzle portion 14a by as a stretch tube nut 25, which is provided at the lower end of a stretch tube 24, pulling the diffuser 13 downward.

Reference numeral 26 represents a purge water inlet, the purge water from this inlet 26 is sent into a narrow gap 27 between the stretch tube 24 and the pump shaft 16 through an aperture 24a defined in the stretch tube 24. When thus input, the purge water cuts off the flow of reactor coolant within the reactor pressure vessel 1 and motor case 14 through the narrow gap 27.

A sealing assembly 28 is provided at the lower end of the stretch tube 27 in order to mechanically intercept any leakage of reactor coolant from within the reactor pressure vessel 1.

Figure 3 is an enlarged sectional view of portions close to the main pump body 9.

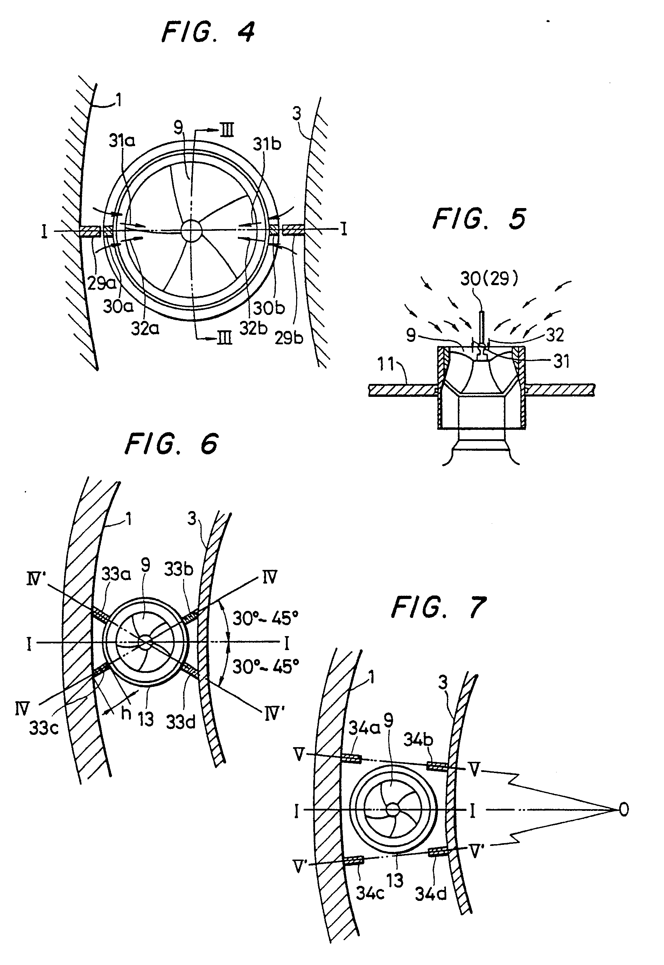

In the drawing, a baffle 29a and a baffle 29b are shown attached to the inner wall of the reactor pressure vessel 1 and to the outer wall of the shroud 3, respectively, by welding, for example, so that they are aligned along a line (line I—I in Figure 4) connecting the center of the main pump body 9 to that of the reactor pressure vessel 1. Similarly, baffles 30a and 30b are attached by welding, for example, to the end surface of the diffuser 13 on its suction side so as to be aligned along that line. In this case, they may be cast integrally with the diffuser 13.

The inner positions of the baffles 30a and 30b are set to substantially the same positions as the maximum diameter of the impeller 10, while the outer positions thereof are set to substantially the same positions as the maximum diameter of the diffuser 13. The inner positions of the baffles 29a and 29b are set so that they are considerably larger than the maximum diameter of the diffuser 13. These baffles 29a, 29b, 30a and 30b project from the inlet end surface of the pump main body 9 towards the upstream side, the length of this projection is preferably set to be about half the diameter of the inlet of the impeller 10.

When the baffles are arranged in the manner described above, the fluidizing state of the flow close to the inlet of the main pump body is as follows.

The flow in the proximity of the pump axis, which is the main stream of the reactor coolant, is sucked directly into the pump, but the flows of reactor coolant at positions some distance from the pump inlet in the circumferential direction of the reactor pressure vessel 1 vary because of the presence of the pump deck 11. Namely, as shown in Figures 4 and 5, they flow towards the pump inlet in the circumferential direction, and impinge against each other at the positions of the baffles 29a, 29b and 30a, 30b. Because of these baffles, however, these flows do not run to the opposite side beyond the baffles, and the direction of flow of the reactor coolant changes at approximately right angles, as represented by 31a, 31b and 32a, 32b, and flows towards the pump inlet. In other words, the pair of flows of reactor coolant which are symmetrical to each other and run in the circumferential direction in the proximity of the wall of the annular passage are guided by the baffles in the radial direction of the inlet, and are mixed together at the ends of the baffles. After passing the baffles, the flows run in the radial direction of the pump inlet, and their directions are the same. The flow velocities are substantially the same because the flows are symmetrical. Accordingly, when these flows of reactor coolant are mixed, vigorous shear flows and the generation of vortices can be avoided.

Because the generation of vortices in the pump flow passage can thus be avoided, in accordance with the present invention, the pump can operate smoothly and quietly, and reliability of the pump can be improved. Since the positions at which the baffles 30a, 30b are fitted are larger than the maximum diameter of the impeller while those of the baffles 29a, 29b are larger than the maximum diameter of the diffuser, no specific additional labor is required in the assembly and disassembly of the pump.

Figure 6 shows a second embodiment of the pump inlet portion of the present invention. In the drawing, baffles 33a—33d are shown arranged on a pair of lines IV—IV and IV'—IV' which are at an angle of 30—45° to the line I—I connecting the axis of the pump to the reactor core, on the inner wall of the reactor pressure vessel 1 and within the space between the shroud 3 and the diffuser 13. Since a width h can be secured for the baffles in this embodiment, the baffles on the end surface of the diffuser 13 can be omitted. The effect of the prevention of the generation of vortices due to the disposition of baffles can be obtained in the same way as in the embodiment described above.

Figure 7 shows a third embodiment of the pump inlet portion of the present invention.

In the drawing, baffles 34a—34d are shown arranged on tangents V—V and V'—V' from the reactor core O to the outer peripheral surface of the diffuser 13. This arrangement can also prevent the generation of vortices in the same way as in the foregoing embodiments.

In accordance with the embodiments described above, the baffles can be arranged at positions some distance from the diffuser, so that the accuracy required when fitting the baffles can be reduced, and the producibility thereof improved.

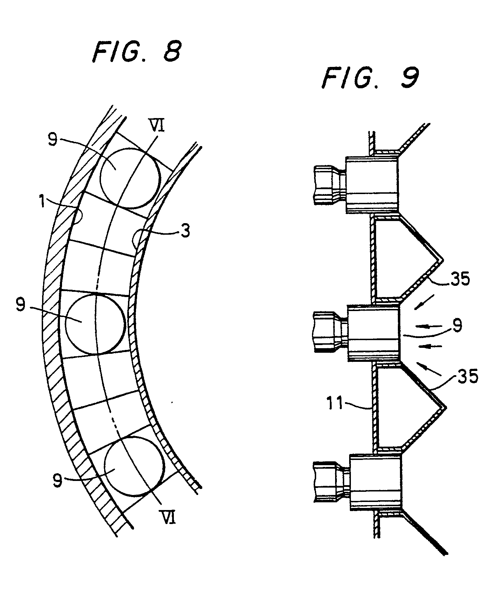

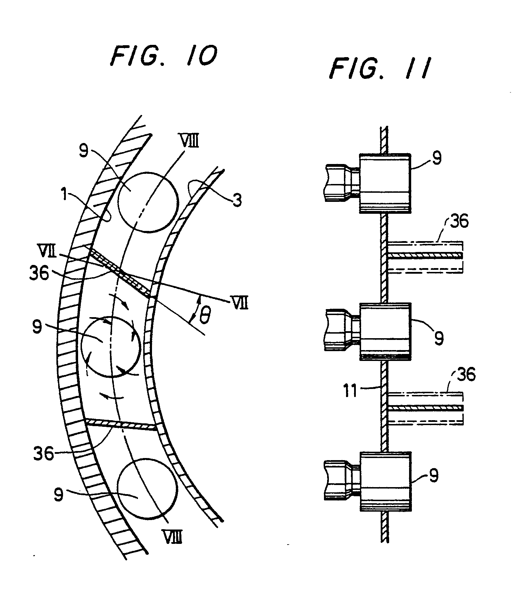

Figures 8 and 9 show a fourth embodiment of the pump inlet portion in accordance with the present invention. Figure 9 is a partially-sectioned developed view taken along the line VI—VI connecting the center of the main pump bodies in the peripheral direction.

Each baffle 35 in this embodiment has a shape such that it extends from the pump inlet towards its suction side, and widens from the end of its extension towards the adjacent diffusers 13, that is, towards the outer peripheral surface of the pump inlet. The baffles 35 are provided at the pump inlets of the pumps.

Since these baffles 35 are provided, the flows of reactor coolant running from the circumferential direction towards the pump inlets are guided by the baffles 35 and are smoothly sucked in, as indicated by the arrows in the drawing, so that the flows do not impinge against one another and do not generate any shear flow. Accordingly the generation of vortices is also prevented.

Figures 10 and 11 show a fifth embodiment of the pump inlet portion of the present invention.

Figure 11 is a partially-sectioned developed view taken along a line VIII—VIII connecting the center of the main pump bodies in the peripheral direction.

Baffles 36 in this embodiment are arranged obliquely with respect to a line VII—VII passing through an intermediate portion between adjacent peripheral surfaces of main pump bodies, and extending to the reactor core. The angle of inclination θ is preferably between about 10° and about 30°. In a suction flow passage with such a construction, the flows of reactor coolant flowing into portions in the proximity of the pump deck 11 are guided by the baffles 36 inclined at the angle θ, are turned into flows with swirl components represented by the arrows in the drawing, and are sucked into the pump inlets. Since the suction flows have swirl components, the uniformity of the flows at the pump inlets can be improved, and mutual impingement of the flows of the reactor coolant, and hence the generation of vortices, can be eliminated.

Either a prerotation in the same direction as the rotational direction of the impeller, or a reverse rotation can be given to the angle at which the baffles 36 are fitted, in consideration of the specifications of the pump and the gradient of the flow/pressure- (Q—H)-characteristic curve thereof.

As described above, the present invention provides baffles for guiding the flows of reactor coolant towards pump inlets on the outer peripheral surfaces of the pump inlets of recirculation pumps, and can therefore prevent the generation of vortices that would otherwise occur in the proximity of the pump inlets. As a result, the present invention can eliminate the noise and vibration resulting from the generation of vortices, and can improve the reliability of the pumps.

**Claims**

1. A boiling water reactor including a reactor pressure vessel (1), a shroud (3) provided within said reactor pressure vessel (1), a reactor core (2) provided within said shroud (3) and a plurality of internal recirculation pumps (8) arranged in a separated relationship in the circumferential direction between the outer peripheral surface of said shroud (3) and the inner peripheral surface of said reactor pressure vessel (1), and coolant flow guiding means arranged on the outer peripheral surface of the pump inlet of each of said recirculation pumps (8), characterized in that the coolant flow guiding means comprises at least two baffles (29a, 29b; 30a, 30b; 33a to 33d; 34a to 34d) substantially closing in a direction circumferential with respect to the pump inlet the gap spaces between the inner surface of the vessel (1) and the outer surface of the shroud (3), respectively, and the outer peripheral surface of the pump inlet of each recirculation pump (8).

2. The boiling water reactor as defined in claim 1 wherein said baffles (29a, 29b; 30a, 30b) are arranged on a line connecting the center of each of said recirculation pumps (8) and said reactor core (2) (Fig. 4).

3. The boiling water reactor as defined in claim 1 wherein at least one of said baffles (30a, 30b) is provided on the outer peripheral surface of said inlet of said recirculation pump (8) between the inner peripheral surface of said reactor pressure vessel (1) and the outer peripheral surface of said shroud (3) (Fig. 4).

4. The boiling water reactor as defined in claim 1 wherein each of said baffles (29a, 29b; 30a, 30b; 33a to 33d; 34a to 34d) extends from the end of said inlet of said recirculation pump (8) towards the suction side of said reactor coolant, and a length by which said baffle extends is at least 1/2 of the diameter of said inlet of said recirculation pump (8) (Figs. 4, 6, 7).

5. The boiling water reactor as defined in claim 1 wherein said baffles (33a to 33d) are arranged along lines crossing pairs of lines at an angle of between 30° to 45° to the line connecting the center of each of said recirculation pumps (8) and said reactor core (2) (Fig. 6).

6. The boiling water reactor as defined in claim 1 wherein said baffles (34a to 34d) are arranged on tangents drawn from said reactor core (2, 0) to the outer peripheral surface of said inlet of said recirculation pump (8) (Fig. 7).

7. The boiling water reactor as defined in claim 1 wherein said baffles (35) are arranged on a line positioned at an intermediate portion between the outer peripheral surfaces of said inlets of adjacent recirculation pumps (8), extending towards said reactor core (2) (Figs. 8, 9).

8. The boiling water reactor as defined in claim 7 wherein said baffles (35) extend from the end of said inlet of each of said recirculation pumps (8) towards the suction side thereof, and widen to the ends thereof from the end of extension to the outer peripheral surfaces of said inlets of adjacent recirculation pumps (8) (Figs. 8, 9).

9. The boiling water reactor as defined in claim 1 wherein said baffles (36) are arranged between the outer peripheral surfaces of said inlets in an arrangement inclined with respect to a line passing through intermediate portions between the outer peripheral surfaces of said inlets adjacent to one another, and extending towards said reactor core (2) (Figs. 10, 11).

10. The boiling water reactor as defined in claim 9 wherein said baffles (36) extend from the end of said inlet of each of said recirculation pumps (8) towards suction side thereof (Figs. 10, 11).

**Patentansprüche**

1. Siedewasserreaktor mit einem Reaktor-Druckbehälter (1), einer Abdeckung (3) in dem Reaktor-Druckbehälter (1), einem Reaktorkern (2) innerhalb der Abdeckung (3) und einer Anzahl von inneren Umwälzpumpen (8), die voneinander getrennt in der Umfangsrichtung zwischen der äußeren Umfangsfläche der Abdeckung (3) und der inneren Umfangsfläche des Reaktor-Druckbehälters (1) angeordnet sind, und mit Kühlmittelstrom-Leitorganen, die an den äußeren Umfangsflächen der Pumpeneinlässe von jeder der Umwälzpumpen (8) angeordnet sind, dadurch gekennzeichnet, daß die Kühlmittelstrom-Leitorgane wenigstens zwei Leitwände (29a, 29b; 30a, 30b; 33a bis 33d; 34a bis 34d) aufweisen, die im wesentlichen in Umfangsrichtung die Zwischenräume zwischen der Innenfläche des Druckbehälters (1) bzw. der Außenfläche der Abdeckung (3) und der äußeren Umfangsfläche des Pumpeneinlasses jeder Umwälzpumpe (8) bezüglich des Pumpeneinlasses schließen.

2. Siedewasserreaktor nach Anspruch 1, wobei die Leitwände (29a, 29b; 30a, 30b) auf einer Linie angeordnet sind, die die Mittelpunkte von jeder der Umwälzpumpen (8) und dem Reaktorkern (2) verbinden (Figur 4).

3. Siedewasserreaktor nach Anspruch 1, wobei wenigstens eine der Leitwände (30a, 30b) an der äußeren Umfangsfläche des Einlasses der Umwälzpumpe (8) zwischen der inneren Umfangsfläche des Reaktor-Druckbehälters (1) und der äußeren Umfangsfläche der Abdeckung (3) vorgesehen ist (Figur 4).

4. Siedewasserreaktor nach Anspruch 1, wobei jede der Leitwände (29a, 29b; 30a, 30b; 33a bis 33d; 34a bis 34d) sich vom Ende des Einlasses der Umwälzpumpe (8) zur Ansaugseite des Reaktor-Kühlmittels hin erstreckt und wobei die Länge, um die sich die Leitwand erstreckt, wenigstens 1/2 des Durchmessers des Einlasses der Umwälzpumpe (8) beträgt (Figuren 4, 6, 7).

5. Siedewasserreaktor nach Anspruch 1, wobei die Leitwände (33a bis 33d) längs Linien angeordnet sind, die Linienpaare zu der Linie, die die Mittelpunkte jeder der Umwälzpumpen (8) und den Reaktorkern (2) verbinden, unter einem Winkel zwischen 30° bis 45° kreuzen (Figur 6).

6. Siedewasserreaktor nach Anspruch 1, wobei die Leitwände (34a bis 34d) an Tangenten von dem Reaktorkern (2, 0) zu den äußeren Umfangsflächen des Einlasses der Umwälzpumpe (8) angeordnet sind (Figur 7).

7. Siedewasserreaktor nach Anspruch 1, wobei die Leitwände (35) an einer Linie angeordnet sind, die in einem Zwischenabschnitt zwischen den äußeren Umfangsflächen der Einlässe benachbarter Umwälzpumpen (8) verläuft, und sich zum Reaktorkern (2) hin erstrecken (Figuren 8, 9).

8. Siedewasserreaktor nach Anspruch 7, wobei sich die Leitwände (35) von dem Ende des Einlasses jeder Umwälzpumpe (8) zur Ansaugseite hin erstrecken und zu den Enden davon vom Ende der Erstreckung zu den äußeren Umfangsflächen der Einlässe benachbarter Umwälzpumpen (8) hin erweitern (Figuren 8, 9).

9. Siedewasserreaktor nach Anspruch 1, wobei die Leitwände (36) zwischen den äußeren Umfangsflächen der Einlässe in einer bezüglich einer Linie, die durch Zwischenabschnitte zwischen den äußeren Umfangsflächen der aneinander angrenzenden Einlässe verläuft, geneigten Anordnung und zum Reaktorkern (2) hin erstreckend vorgesehen sind (Figuren 10, 11).

10. Siedewasserreaktor nach Anspruch 9, wobei sich die Leitwände (36) vom Ende des Einlasses jeder Umwälzpumpe (8) zur Ansaugseite davon erstrecken (Figuren 10, 11).

**Revendications**

1. Réacteur à eau bouillante comprenant une cuve de pression de réacteur (1), une enveloppe (3) disposée à l'intérieur de ladite cuve de pression de réacteur (1), un coeur de réacteur (2) disposé à l'intérieur de ladite enveloppe (3) et une pluralité de pompes internes de remise en circulation (8), disposées de façon séparée en direction circonférentielle entre la surface périphérique externe de ladite enveloppe (3) et la surface périphérique interne de ladite cuve de pression de réacteur (1), et un moyen de guidage d'écoulement de réfrigérant disposé sur la surface périphérique externe de l'entrée de pompe de chacune desdites pompes de remise en circulation (8), caractérisé en ce que le moyen de guidage de courant de réfrigérant comprend au moins deux chicanes (29a, 29b; 30a, 30b; 33a à 33d; 34a à 34d) fermant sensiblement dans une direction circonférentielle par rapport à l'entrée de la pompe les interstices situés entre la surface interne de la cuve (1) et la surface externe de l'enveloppe (3), respectivement, et la surface périphérique externe de l'entrée de pompe de chaque pompe de remise en circulation (8).

2. Réacteur à eau bouillante selon la revendication 1, dans lequel lesdites chicanes (29a, 29b; 30a, 30b) sont disposées sur une ligne reliant le centre de chacune desdites pompes de remise en circulation (8) et ledit coeur (2) du réacteur (figure 4).

3. Réacteur à eau bouillante selon la revendication 1, dans lequel au moins l'une desdites chicanes (30a, 30b) est prévue sur la surface périphérique externe de ladite entrée de ladite pompe de remise en circulation (8) entre la surface périphérique interne de ladite cuve de pression de réacteur (1) et la surface périphérique externe de ladite enveloppe (3) (figure 4).

4. Réacteur à eau bouillante selon la revendication 1, dans lequel chacune desdites chicanes (29a, 29b; 30a, 30b; 33a à 33d; 34a à 34d) s'étend depuis l'extrémité de ladite entrée de ladite pompe de remise en circulation (8) en direction du côté aspiration dudit réfrigérant de réacteur, et la longueur sur laquelle ladite chicane s'étend est au moins la moitié du diamètre de ladite entrée de ladite pompe de remise en circulation (8) (figures 4, 6, 7).

5. Réacteur à eau bouillante selon la revendication 1, dans lequel lesdites chicanes (33a à 33d) sont disposées le long de lignes croisant des paires de lignes en formant un angle compris entre 30° et 45° par rapport à la ligne reliant le centre de chacune desdites pompes de remise en circulation (8) et ledit coeur (2) du réacteur (figure 6).

6. Réacteur à eau bouillante selon la revendication 1, dans lequel lesdites chicanes (34a à 34d) sont disposées sur des tangentes tirées à partir dudit coeur (2, 0) du réacteur vers la surface périphérique externe de ladite entrée de ladite pompe de remise en circulation (8) (figure 7).

7. Réacteur à eau bouillante selon la revendication 1, dans lequel lesdites chicanes (35) sont disposées sur une ligne passant dans une position intermédiaire entre les surfaces périphériques externes desdites entrées de pompes de remise en circulation adjacentes (8), s'étendant en direction dudit coeur (2) du réacteur (figures 8, 9).

8. Réacteur à eau bouillante selon la revendication 7, dans lequel lesdites chicanes (35) s'étendent depuis l'extrémité de ladite entrée de chacune desdites pompes de remise en circulation (8) en direction de leur côté aspiration, et s'élargissent en direction de leurs extrémités à partir de l'extrémité du prolongement jusqu'aux surfaces périphériques externes desdites entrées de pompes de remise en circulation adjacentes (8) (figures 8, 9).

9. Réacteur à eau bouillante selon la revendication 1, dans lequel lesdites chicanes (36) sont disposées entre les surfaces périphériques externes desdites entrées selon un agencement incliné par rapport à une ligne passant par des parties intermédiaires entre les surfaces périphériques externes desdites entrées adjacentes les unes des autres et s'étendant en direction dudit coeur (2) du réacteur (figures 10, 11).

10. Réacteur à eau bouillante selon la revendication 9, dans lequel lesdites chicanes (36) s'étendent depuis l'extrémité de ladite entrée de chacune desdites pompes de remise en circulation (8) en direction de leur côté aspiration (figures 10, 11).

# FIG. 1

FIG. 2

FIG. 3

0 129 749

FIG. 4

FIG. 5

FIG. 6

FIG. 7

3

FIG. 8

FIG. 9

FIG. 10

FIG. 11